# EUROPÄISCHE PATENTSCHRIFT

(11) **EP 0 937 274 B1**
(45) Veröffentlichungstag und Bekanntmachung des Hinweises auf die Patenterteilung: **27.02.2002**
(21) Anmeldenummer: 97951059.1
(22) Anmeldetag: 05.11.1997
(51) Int. Cl.: G02B 27/22, H04N 13/00

(54) **STEREO-HOLOGRAMM-DISPLAY (HOLDISP)**
STEREO HOLOGRAM DISPLAY (HOLDISP)
AFFICHAGE PAR HOLOGRAMME STEREO

(30) Priorität: 08.11.1996 DE 19646046
(43) Veröffentlichungstag der Anmeldung: 25.08.1999
(73) Patentinhaber: Hentschke, Siegbert, Prof. Dr., 34121 Kassel (DE)
(72) Erfinder: Hentschke, Siegbert, Prof. Dr., 34121 Kassel (DE)
(74) Vertreter: Freiherr von Schorlemer, Reinfried, Dipl.-Phys.
(86) Internationale Anmeldenummer: DE9702625
(87) Internationale Veröffentlichungsnummer: WO9821619

(56) Entgegenhaltungen:
- EP-A- 0 726 482
- WO-A-94/06249
- GB-A- 1 220 705
- KREUZER M: "NEW LIQUID CRYSTAL DISPLAY WITH BISTABILITY AND SELECTIVE ERASURE USING SCATTERING IN FILLED NEMATICS" APPLIED PHYSICS LETTERS, Bd. 62, Nr. 15, 12.April 1993, Seiten 1712-1714, XP000367448 in der Anmeldung erwähnt

## Beschreibung

Die Erfindung betrifft einen autostereoskopen Bildschirm für mehrere Betrachter, der eine Vielzahl von Perspektiven eines Gegenstandes gleichzeitig darzustellen vermag und deshalb "Stereo-Hologramm-Display" genannt wird. Ein solcher autostereoskoper Bildschirm ist aus der Patentschrift [11] bekannt, der jedoch im Gegensatz zu der hier beschriebenen Erfindung nur zwei Perspektiven eines Gegenstandes gleichzeitig darstellen kann. Dieser Erfindung liegt die Aufgabe zugrunde, eine autostereoskope Darstellung zu gewährleisten, die sich nicht nur auf eine Betrachterposition bezieht, sondern auf einen ganzen Bereich von Betrachterpositionen,aus denen sich ein darzustellender Gegenstand naturgetreu dreidimensional betrachten läßt; damit können auch mehrere Betrachter gleichzeitig den dargestellten Gegenstand dreidimensional erkennen.Diese Aufgabe wird durch die kennzeichnenden Merkmale in Anspruch 1 gelöst. Die hier erforderliche darzustellende Vielzahl von Perspektiven eines Gegenstandes wird durch eine Anordnung erreicht, bei der sich in den vertikalen Brennpunktlinien einer Linsenrasterscheibe ein schwarz/weißes Mikrodisplay (oder auch Photomaske) befindet, auf dem ( der ) in schmalsten Streifen die vielen verschiedenen Ansichten eines Gegenstandes nebeneinander verkämmt dargestellt werden. Die verschiedenen Grau- und Farbwerte werden dann durch dazwischen befindliche fest angeordnete Farb- und Helligkeitsmasken erreicht.

Die Erfindung bezieht sich auf 3-dimensionale hologrammartige Farbbild-Darstellungen und Aufbereitungen, bei denen eine Vielzahl stereoskoper Ansichten eines Objektes in Abhängigkeit von der Position eines Betrachters dargestellt werden kann. Der vor dem Stereo-Hologramm-Display stehende Betrachter kann dabei durch laterale Bewegungen des Kopfes einen dargestellten Gegenstand aus mehreren Perspektiven betrachten - bis hin zu einer vorher wählbaren "Rundherum-Sicht". Insbesondere ist dieses hochauflösende Display für den Radiologen in der Computertomographie der Medizintechnik geeignet, bei dem es darauf ankommt, auch die dritte Dimension der Tiefe ohne zusätzliche Hilfsmittel (z.B. Brille) wahrnehmen zu können. Das von einem Computer berechnete Farbhologramm kann mittels modulierter Laserstrahlen innerhalb einiger Minuten auf ein digitales Display geschrieben werden und auf einem gleich großen preisgünstigen Schwarz/Weiß-Foto archiviert werden. Alternativ kann aber auch nur diese schwarz/weiße Fotomaske hergestellt werden und hinter einen Displayvorsatz gesteckt werden, so daß das gleiche Stereo-Hologramm sichtbar wird. Bei der Darstellung von Objekten braucht man sich nicht auf äußere Ansichten zu beschränken: beispielsweise kann man bei Vorliegen einer dreidimensionalen Gewebebeschreibung aus der Kernspintomographie Innen- und Außenansichten (z.B. einer Niere) kombinieren und nacheinander auf einem Stereo-Hologramm darstellen lassen.

**STAND DER TECHNIK:** Stereoskope Film- und Projektionsverfahren sind seit Jahren im Einsatz. Meist wird polarisiertes Licht (horizontal/vertikal, zirkular) benutzt, um das rechte und linke Bild zu trennen [10]. Mit dem Fortschritt der LCD-Technik wurde es möglich, die Lichtdurchlässigkeit von Kristallen elektronisch zu steuern. Dies machte die Entwicklung der Shutter-Technik möglich, bei der synchron mit der Halbbildfrequenz abwechselnd das rechte und das linke Brillenglas lichtundurchlässig wird und synchron dazu rechte und linke Bilder sequentiell auf dem Bildschirm erscheinen [6].

Autostereoskope Projektionen werden mit Hilfe von Leinwänden mit Streifenlinsenraster bei mehreren Projektionsrichtungen durchgeführt. Dabei wird der entsprechenden Richtung das richtige Perspektivbild zugeordnet [1], [2]. Ein fließender Übergang von einer Perspektive zur nächsten ist dabei kaum zu erreichen, da die Anzahl der Projektionsrichtungen nicht beliebig erhöht werden kann. Bei einem autostereoskopen Display, das für nur eine Person bestimmt ist, verwendet man nur zwei Perspektiven, die eine bestimmte Blickrichtung erfordern [7], [8]. Ein voll stereoskopes Bild wie in einem Hologramm darzustellen, wird erreicht unter Verwendung von "Head Trakking"-Sensoren, die einerseits einen leistungsstarken Echtzeitrechner zur Berechnung der passenden stereoskopen Bildperspektiven und andererseits den autostereoskopen Schirm steuern zur mechanischen Nachführung der Linsenrasterscheibe. Hierbei wird die genaue Kopfposition und -bewegung detektiert und die zugehörigen Bilder werden gleichzeitig generiert. Darüberhinaus kommen auch aufwendige VR-Systeme (Virtuell Reality) unter Benutzung gewöhnungsbedürftiger "Head Mounted Displays" zum Einsatz.

In der Medizintechnik sind Kernspinresonanz und Computertomographie die wichtigsten Einsatzgebiete für stereoskope 3D-Visualisierungen. Um bestimmte gesuchte Perspektiven zu berechnen, werden leistungsfähige Spezialrechner für "Volume Tracking Algorithms" entwickelt [5]. Kombinierte Computervisualisierungen und Echtzeitübertragungen von Endoskopen werden zu einem der wichtigsten neurochirurgischen Werkzeuge. Stereoskope Endoskope sind bereits im Einsatz. Eine elektronische Bewegungssteuerung über einen auf Infrarotbasis arbeitenden "Head Trakking Sensor" wird leicht zu kombinieren sein mit einem personenbezogenen autostereoskopen Bildschirmsystem.

Prototypen autostereoskoper Bildwiedergabesysteme werden derzeit vielerorts entwikkelt. Die meisten benötigen hochpräzise mechanische Teile für die Bewegungsnachführung bei Positionsveränderungen des Betrachters. Es sind aber auch elektronisch adaptive Shuttersysteme bekannt, die zwei Displays benötigen [8], [9].

Seit vielen Jahren sind holographisch gespeicherte 3D-Bilder bekannt, bei denen die Bildinformation auf höchstauflösendem Fotomaterial in Form von Wellenbildern festgehalten wird. Diese entstehen aus der Superposition kohärenten oder auch monochromatischen Lichts, das von aufzunehmenden Körpern reflektiert wurde. Das 3D-Bild kann dann durch Bestrahlen mit kohärentem Licht wieder sichtbar gemacht werden. Leider geht dabei die Farbinformation verloren.

Seit wenigen Jahren sind auf der Basis von bistabilen Flüssigkeitskristallen gebaute Displays bekannt, die mit Laserstrahlen beschrieben werden können. Auf wenigen µm² großen Bereichen können dort Flüssigkeitskristalle vom transparenten in einen dispersiven d.h. streuenden Zustand umkippen - durch Zufuhr von Laserenergie. Dieser Zustand kann dann ohne Energiezufuhr jahrelang erhalten bleiben oder durch Anlegen einer elektrischen Spannung wieder gelöscht werden [12]. Es kann also Information hier binär gespeichert werden. Im Folgenden werden diese beschreibbaren Flächen als Streudisplays bezeichnet.

**PROBLEMSTELLUNG**: Das Ziel ist es, 3-dimensionale Bilder so zu speichern, daß man darzustellende Körper aus verschiedenen Betrachtungspositionen stereoskop sieht, und zwar aus unterschiedlichen Perspektiven. Bei lateraler Bewegung des Kopfes eines Betrachters soll also eine hologrammartige Veränderung des dargestellten Farbbildes entstehen. Die hieraus hervorgehende Problemstellung ist nun, derartige Farbbild-Stereo-Hologramme mit Hilfe von Streudisplays und weiteren speziellen Anordnungen zu erzeugen, so daß ein solches Stereo-Farbhologramm mit Laserstrahlen in einer akzeptablen Zeit geschrieben werden kann. Das Farbhologramm soll nach Möglichkeit anschließend ohne Energiezufuhr erhalten bleiben oder aber auch gelöscht werden können, so daß dieses Display erneut für ein nächstes Stereo-Hologramm genutzt werden kann.

Darüber hinaus soll es möglich sein, das gleiche Bild auf einem marktüblichen Schwarz/Weiß-Film zu konservieren. Gleichzeitig soll dieser Film dazu benutzt werden können, das auf ihm binär gespeicherte Stereo-Hologramm mittels eines vorhandenen Vorsatzes sichtbar zu machen. Vorteilhaft wäre es dabei, wenn dieser Vorsatz identisch wäre mit dem, der für das Streudisplay benötigt wird.

Es sind bislang keine beschreibbaren Stereo-Hologramm-Displays bekannt, die die oben genannten Merkmale aufweisen würden.

**PRINZIP DER ERFINDUNG:** Die in der Problemstellung beschriebenen Leistungsmerkmale eines Stereo-Hologramm-Displays können erzielt werden unter Verwendung eines aus [1], [2], [8], [11] bekannten Zylinder-Linsen-Rasterglases, eines aus [4] und [12] bekannten Streudisplays und einiger noch näher zu beschreibender Maskierungslayer, die in ganz bestimmter Weise zusammengefügt werden. Das Display wird mittels paralleler Laserstrahlen beschrieben, die mit einem passenden Code moduliert werden. Es wird vorausgesetzt, daß 3-dimensionale Objektinformationen aus NMR (Nuclear Magnetic Resonance) oder Röntgentomographie in einem Graphik-Rechner vorliegen. Aus diesen Daten werden dann alle gewünschten perspektivischen Ansichten berechnet - dies können durchaus bis zu 100 sein - jede für eine bestimmte Blickrichtung, aus der die Ansicht des Objektes später zu sehen sein soll. Alle diese Perspektiven des Objektes werden dann auf dem Stereo-Hologramm-Display zu einem vollständigen farbigen 3D-Bild zusammengesetzt, bei dem auch die gewünschte Perspektive durch die Betrachtungsrichtung bzw. Kopfposition selektiert werden kann.

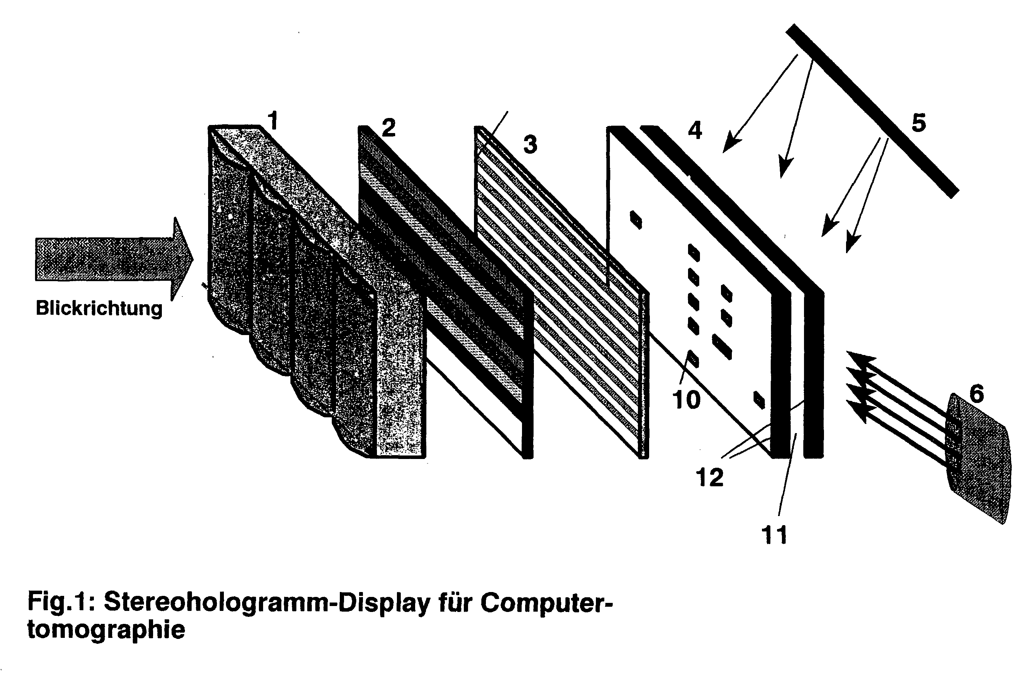

Der Aufbau und die Funktion dieses Displays werden nun anhand der Zeichnung in Fig. 1 näher beschrieben. Das Bild zeigt verschiedene Schichten des Displays, die auseinandergezogen dargestellt sind. Die Vorderseite des Stereo-Hologramm-Displays besteht aus einem Zylinderlinsen-Rasterglas (1), mit beispielsweise 1024 Zylinderlinsen im Pitchabstand von ca. 0,5 mm, um eine geeignete Breite zu nennen (selbstverständlich sind für unterschiedliche Betrachtungsabstände vom Display unterschiedliche Linsenbreiten optimal). Die Linsen fokussieren in bezug auf den Betrachterabstand *a* (im zusammengesetzten Zustand des Hologramm-Displays) in der LC-Schicht (Liquid Cristal) des Streudisplays (4) mit einer Pixelgröße von 8µm*4µm, das aus Flüssigkristallen (11) zwischen zwei Glasplatten (12) aufgebaut ist. Zwischen dem Streudisplay (4) und der Linsenrasterscheibe (1) befinden sich zwei Masken: eine Farbmaske (2) und eine Helligkeitsmaske (3). Von hinten wird das Streudisplay mit weißem Licht belichtet (5). Zum Beschreiben des Streudisplays werden Laserstrahlen aus einer gesteuerten Laserdiode verwendet (6).

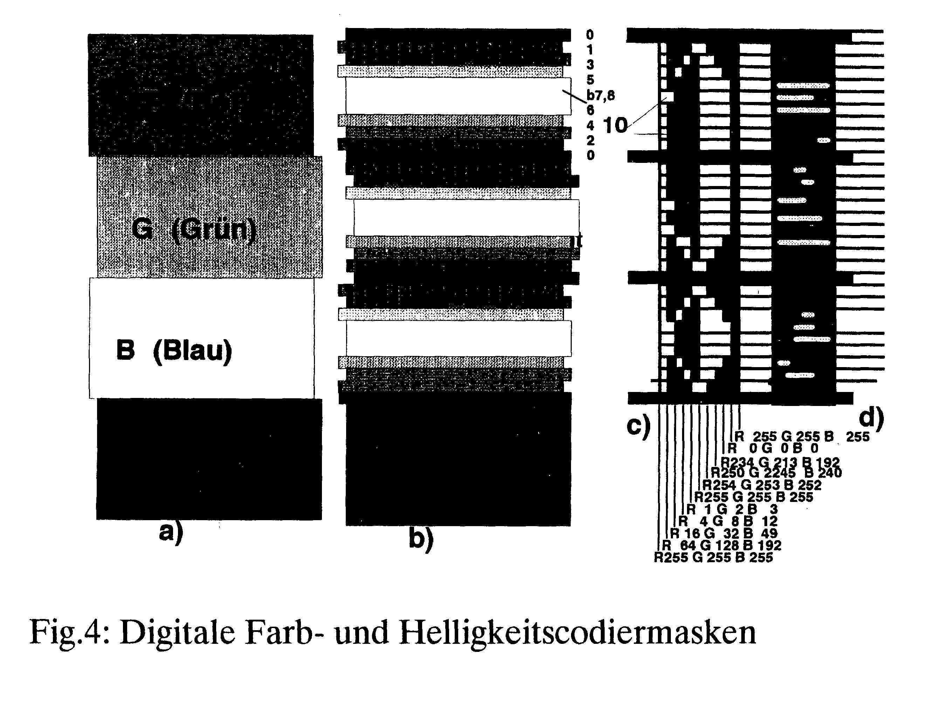

Farb- und Helligkeitsmasken sind in Fig. 4 ausführlicher erläutert: Die Farbmaske hat drei waagerechte transparente Farbfilterstreifen, die rotes (R), grünes (G) bzw. blaues (B) Licht unverändert passieren lassen und die jeweiligen komplementären Anteile wegfiltern. ein Stereo-Hologramm-Display nach der Erdindung weist hinter jedem waagerechten Farbstreifen der Farbmaske (2) einen Helligkeitscodierstreifen (vgl. Fig. 4 b) der Helligkeitsmaske (3) auf, der selbst in waagerechte Teilstreifen unterteilt ist mit unterschiedlichen Lichtdurchlaßkoeffizienten (vorzugsweise Zweierpotenzen für die Amplitude z. B. 1. 1/2, 1/4, 1/8, 1/16,...). Dabei liegen die binären, schwarzen oder weißen Mikrofelder (10) auf dem Mikrodisplay (4) jeweils innerhalb eines solchenschmalen Heilligkeits-Teilstreifens. Die innerhalb eines Farbstreifens übereeinanderliegenden Mikrofelder sind so an- oder abgeschaltet, daß die durchgelassene Lilchtamplitude über einen Farbstreifen in der Summe der gewünschten Helligkeitsstufe entspricht. Die Helligkeits-Teilstreifen sind vorteilhafterweise so plaziert, daß die helleren lichtdurchlässigeren Teilstreifen mehr in der Mitte der Farbststreifen zu liegen kommen, während die dunkleren zu den Farbübergängen hin verschoben sind.
Optional ist ein etwa gleich breiter schwarzer Streifen, der alle Lichtwellenlängen wegfiltert. Alle vier bzw. drei Streifen haben zusammen eine Breite, die etwa einer Linsenbreite entspricht, z.B. 0,5 mm. Die Farbstreifen-Höhe beträgt ca. 80µm, die vertikale Pitchhöhe ca. 0,32mm. Hinter jedem Farbstreifen (R, G oder B) vgl. a) Fig. 4, befindet sich ein Helligkeitsmaskierstreifen, vgl. b) Fig. 4. Dieser Maskierstreifen ist seinerseits in weitere Unterstreifen unterteilt, z.B. 10 mit je einer Breite von ca. 8 µ. Bei anderen Ausführungen mit weniger Helligkeitsstufungen können auch weniger Unterstreifen, z.B. 8 oder 4 vorgesehen werden. Jeder Unterstreifen besitzt eine bestimmte Lichtdurchlässigkeit ( wellenlängenunabhängig ), die eine möglichst einfache binäre Helligkeitscodierung zuläßt. Beispielsweise haben diese Unterstreifen Lichtdurchlässigkeiten folgender verschiedener Klassen: 1. die gesamte Amplitude des Lichtes wird durchgelassen, 2. die Hälfte der Amplitude (1/2) wird durchgelassen, 3. ein Viertel (1/4) der Amplitude wird durchgelassen, 4. ein Achtel der Amplitude (1/8= 1/2³), 5. ein Sechzehntel der Amplitude (1/16= 1/2⁴), ..., bis 8.) ein Einhundertachtundzwanzigstel (1/128= 1/2⁷). Ein Unterstreifen der Durchlässigkeitsklasse 1 kann dabei die relative Helligkeit von 64 aufweisen.
In den Unterstreifen müssen nicht alle Durchlässigkeitsklassen vorkommen. Beispielsweise kann die Klasse 8 weggelassen werden, wenn 3 Streifen der Klasse 1 verwendet werden. In Fig. 4 b) sind 3 Unterstreifen der Klasse 1 verwendet, die in der Mitte eines Farbstreifens direkt nebeneinander plaziert sind, so daß ein dreimal so breiter Unterstreifen der Klasse 1 entsteht.Mit diesen drei Streifen ist es beispielsweise möglich, relative Helligkeitswerte von 0x64, 1x64, 2x64, 3x64 zu erzeugen, indem die dahinterliegenden 3 schwarz-weißen Mikropixel des Displays entsprechend angesteuert werden. Jedes Mikropixel eines Helligkeitsunterstreifens auf dem Display kann entweder Licht streuen oder keins. Darüber hinaus sind in dem Beispiel Fig. 4 b) Helligkeitsstreifen der Klassen 2 bis 7 verwendet. Durch eine ausgewählte Ansteuerung der dahinterliegenden 9 Mikropixel des Displays können dann durch die Überlagerung in einem Farbstreifen relative Helligkeitswerte von 0 bis 255 erzeugt werden - entsprechend einer 8Bit- Codierung.

Die Verwendung von drei nebeneinanderliegenden Unterstreifen der Klasse 1 verringert effektive Lichtabsorption im Maskierungsstreifen und erhöht die Unempfindlichkeit gegenüber einer geringfügigen Höhentoleranz des darauffolgenden Streudisplays, vgl. d) Fig. 4. Die anderen schmalen Streifen lassen - wie bereits erläutert-die Helligkeitsanteile der Amplitude durch von 50%, 25%, 12,5%, 6,25%. 3,125%, 1,56025% bzw. 0%. Beispiele von codierten Helligkeitsstufungen sind in c) Fig. 4 angegeben. Im einzelnen sind in Fig.4 a) bis d) dargestellt: a) Farbmaske; Höhe eines Farbstreifens ca. 80µm, GBS-Pitchhöhe ca. 320µm b) Helligkeitsmaske mit 7 Helligkeitsstufen (+ schwarz) mit 9 Farbstreifen für eine 8-bit Helligkeitscodierung c) Beispiel für eine digitale Farbpixelcodierung eines Stereohologramms auf einem schwarz/weiß-Film mit Angabe zugeordneter Helligkeitswerte d) Beispiel für den Verlauf eines Codemusters von einem Streudisplay, das von Laserstrahlen beschrieben wurde.

Es sind natürlich auch andere Helligkeitsmasken ausführbar, die einer kleineren Helligkeitsstufenzahl entsprechen. Der lichtundurchlässige schwarze Streifen ist sinnvollerweise so plaziert, daß er den Übergang von einer Farbe zur nächsten verdeckt. Für das gesamte Stereo-Hologramm-Display ist bei dem vorgesehenen Einsatz in der Medizintechnik eine Größe vorgesehen von ca. 50 cm Breite und 28 cm Höhe. Das ist für das zu fertigende LC-Streudisplay ungewöhnlich groß, aber machbar, weil schmale lichtundurchlässige waagerechte Streifen auftreten dürfen, in denen Drähte für Löschelektroden und Abstandshalter untergebracht werden können.

Ein Stereo-Hologramm-Display mit einem LC-Streudisplay als binärem Mikrodisplay (4) nach der Erfindung wird von schräg oben oder unten mit weißem Licht bestrahlt, so daß die durchgehenden und nicht zerstreuten Strahlen in eingebetten waagerechten Minispiegelstreifen (9) reflektiert oder waagerechten schwarzen Ministreifen absorbiert werden.

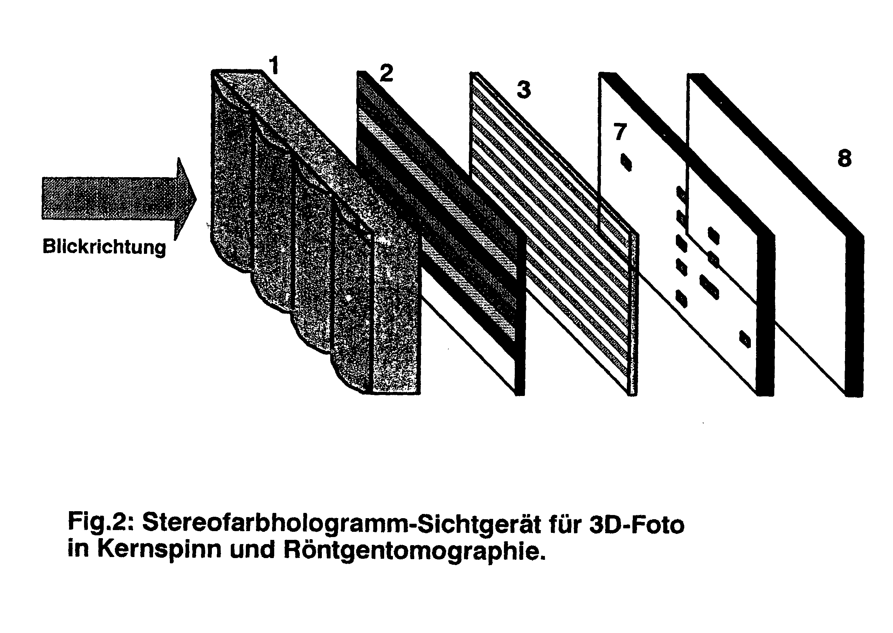

Wie in der Problemstellung bereits erwähnt, soll das Streudisplay auch ersetzt werden können durch einen Film. Bei einem Stereo-Hologramm-Display nach der Erfindung kann das binäre Mikro-Streudisplay (4) abgenommen werden und durch ein Fotodisplay, bestehend aus einem binär beschriebenen Film (7) und einer Beleuchtungsfläche (8) ersetzt werden, auf das die binären Stereo-Hologramme vorher aufgebracht wurden. Schwarz/weiß-Filme dieser Größe und Auflösung sind aber preisgünstig zu haben. Zu achten ist lediglich auf die mikrometergenaue Montage. Diese läßt sich jedoch dadurch sicherstellen, daß der Film fest auf einer Glasplatte aufgebracht ist oder in ein feines Lochraster eingespannt wird. Fig.2 zeigt ein solches Stereo-Hologramm-Sichtgerät, bei dem (7) den Film bzw. die Filmplatte darstellt und (8) den Beleuchtungskasten mit gleichmäßigem dispersem Licht. (7) besteht aus einer Glasplatte mit einem Standard schwarz/weiß-Film, der auf der Vorderseite der Glasplatte aufgebracht ist. Die Auflösung beträgt 3200 dpi. Bei einer Pixelgröße von ca. 8*8µm² ergibt sich ein digitaler Informationsgehalt von rund 180 MByte. Die Reihenfolge der Farb- und Helligkeitsmaske ist mit der Filmplatte (7) vertauschbar. Wichtig ist lediglich, daß die Brennlinien der Zylinderlinsen in beiden Fällen auf der dünnen Filmschicht liegen. Die weiteren Elemente in Fig.2 sind: (1) eine Linsenrasterscheibe mit 1024 Zylinderlinsen, (2) eine Farbstreifenmaske (RGBS) mit einer Streifen-Höhe von 80µm und einer Pitchhöhe von 0,32mm, und (3) eine Graustreifencodemaske mit einer Einzelstreifenhöhe von 8µm. Diese drei Elemente sind identisch mit denen in Fig.1.

Der Fokussierungspunkt von Linsen ist i. a. geringfügig abhängig von der Wellenlänge des Lichtes. Entsprechend der Farbstreifen auf der Maske sind jedoch die drei Farben R,G,B örtlich getrennt. Das hat den Vorteil, daß die Brennweite durch geringfügig unterschiedliche Glasdicken korrigierbar ist.

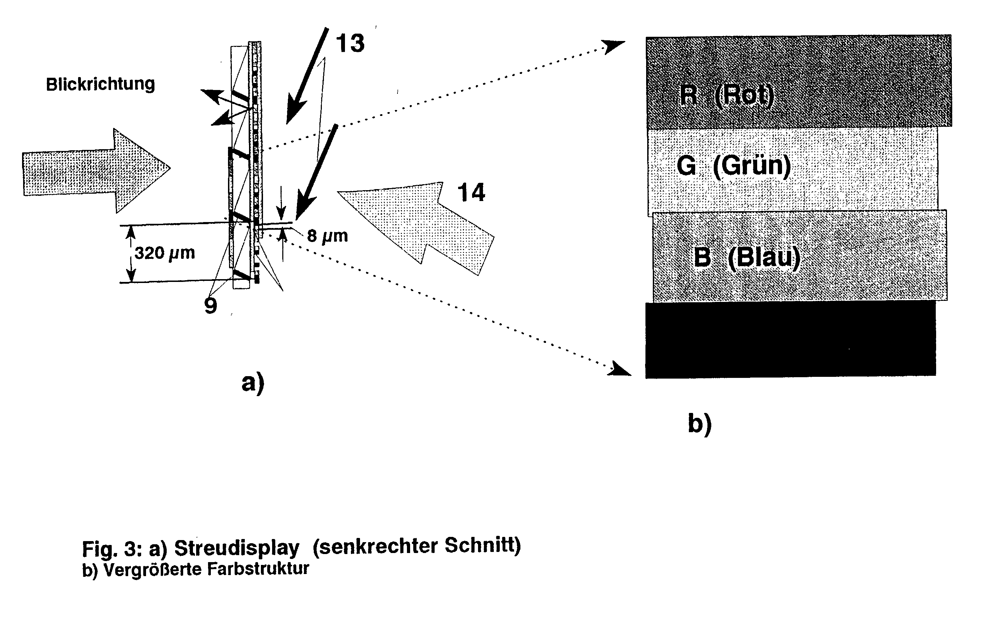

In Fig.3 a) ist ein senkrechter Schnitt durch das Streudisplay dargestellt. Die kleinste binär ansteuerbare Pixelgröße beträgt 4µm*8µm. (13) stellt die Strahlrichtung des weißen Lichts dar und (14) die Laserstrahlschreibrichtung. In Fig.3 b) ist eine vergrößerte Farbstruktur dargestellt, bei der die waagerechten Stufen in Blickrichtung liegen.

### BESCHREIBUNG DER EINSATZGEBIETE FÜR DAS STEREO-HOLOGRAMM-DISPLAY:

Das Stereo-Hologramm-Display stellt Gegenstände oder Landschaften dreidimensional dar. Dabei ist es möglich, auf einer Zylinderlinsenbreite von 0,5 mm bis über 80 verschiedene Ansichten eines räumlichen Gegenstandes darzustellen. Durch laterale Bewegung des betrachtenden Kopfes können dann alle diese Perspektiven der Gegenstände visuell sichtbar gemacht, d.h. betrachtet werden. Die Ansichten werden in der Regel auf einem Computer berechnet. Deshalb besteht die Möglichkeit, auch benachbarte Ansichten darzustellen, die in der Natur nicht auftreten: Zum Beispiel kann bis zu einem bestimmten Betrachtungswinkel das Äußere eines Gegenstandes räumlich dargestellt werden und danach das Innere. Es gibt aber auch dynamische Gestaltungsmöglichkeiten auf einem einzigen Stereo-Hologramm: Es kann beispielsweise ein Gegenstand so dargestellt werden, daß er bei einer kleinen Rechtsbewegung des Betrachters ein vor dem Display erscheinender Gegenstand links rotiert. So könnte z.B. ein Knochenbruch räumlich und ringsherum betrachtet werden. Das wichtigste Anwendungsgebiet wird also die Radiologie in der Medizintechnik sein; wenige Minuten nach der Röntgenaufnahme kann das Ergebnis räumlich auf dem Display betrachtet werden und so lange wie gewünscht erhalten bleiben. Parallel dazu kann das gleiche Hologramm auf einem Film abgespeichert, d.h. für später konserviert werden.

Ein weiteres interessantes Gebiet ist die Werbebranche, da bei ungewohnten, in der Natur nicht auftretenden Effekten, die Aufmerksamkeit der Augen sofort - auch unbewußt - auf ein Objekt gelenkt wird.

Bei der Herstellung noch größerer Displays wird die Architektur ein wichtiges Anwendungsgebiet sein, da interaktiv räumlich erscheinende Gebäude und Land schaften gestaltet werden können, weil auch nur Ausschnitte des Displays gelöscht und verändert wieder beschrieben werden können. Diese Eigenschaft wird auch die gestaltende Kunst gern nutzen.

Es ist aber auch denkbar, daß sich 3D-Fotostudios etablieren werden, die mit Computerunterstützung dreidimensionale Farbporträts anbieten, die man aus mehreren Testaufnahmen ohne nennenswerte Wartezeit auswählen kann. Auch wenn bis zu 100 Einzelperspektiven dargestellt werden, ist es in diesem Falle nicht erforderlich, daß auch 100 Aufnahmen gemacht werden. Es können aus zwei oder vier Aufnahmen, die gleichzeitig aus unterschiedlichen Richtungen mit hochauflösenden Kameras gemacht wurden, die Zwischenperspektiven sofort interpoliert werden. Da die eigentlichen Informationen rein binär abgelegt werden, können auch noch billigere Materialien eingesetzt werden als Filme. Eine hauchdünn aufgebrachte Absorptionsschicht kann durch Laserenergie lokal selektiv verdampft werden.

### Literatur

[1] *R. Börner:* Autostereoscopic 3-D Imaging by Front and Rear Projection and on Flat Panel Displays. Displays, Vol. 14, No.1 (1993), pp. 39-46.
[2] *Lee; Sung:* Recording and Reproducing a 3-Dimensional Image. Internationale Patentanmeldung. PCT Int. Publ. Nb. WO9222989, Int. Class. H04N 13/00.15/00.9/31 G03B 35/08.35/20.35/74, Publ. Date: Dec. 1992.
[3] *S.Hentschke:* Stereoskoper Bildschirm. Patentanmeldung P 41 14 023.0 (1991).
[4] *A. Tschudi, M. Kreuzer:* Laseradressierbares Projektionsdisplay. CeBIT Broschüre Hessischer Hochschulen 1995.
[5] *H.P.Mainzer, K.Meetz, D.Scheppelmann, U.Engelmann, H.J.Bauer:* The Heidelberg Ray Tracing Model. IEEE Computer Graphics and Appl. Nov. 1991 pp.34ff.
[6] *S. Hentschke, A.Herrfeld, C.Junge, J. Kothe :* Personenadaptive stereoskope Bildverarbeitung. CeBIT-Exponat, Broschüre Hessischer Hochschulen, (1995).
[7] *R. Börner:* Autostereoskope Rückprojektions- und Flachbildschirme. Fernseh- und Kinotechnik Bd. 48, Nr. 11 (1994). S.594-600.
[8] *S. Hentschke:* Personenadaptiver autostereoskoper Monitor - eine Option für den Fernseher? Fernseh- und Kinotechnische Zeitschrift Nr.5/1996, S. 242-248
[9] *R. Börner:* Wiedergabeeinrichtung für dreidimensionale Wahrnehmung von Bildern. Autostereoscopic Viewing Device for Creating Three Dimensional Perception of Images. Deutsches Patent Nr. DE 3921061- A1. (Anm. 1989).
[10] *Verhulst, A.G.:* Display and pick-up device for stereoscopic picture display: Europe-an Patent 0 332 268 (1988)
[11] *S. Hentschke*, Personenadaptiver autostereoskoper Shutter Bildschirm (PAAS). Patentschrift DE 19500315 C, (1995).
[12] *M. Kreuzer, T.Tschudi, W. de Jeu, R-Eidenschink:* A new bistable liquid cristal display with bistability and selective erasure using scattering in filled nematics. Appl. Phys. Letters 62, 1712-14, (1993).
[13] N.V. Tabiryan, T. Vogeler, T. Schudi (Inst. of Apppl.Phys. Tech. Hoch schule Darmstadt, Germany. New applications of liquid crystals in electro- and nonlinear optics. Proc. SPIE - Int. Soc. Opt. Eng. (USA), vol. 2175,p. 191-7 (1994). (Liquid Crystal Materials, Devices, and Applications III, San Jose, CA, USA , 8-9 Feb. 1994).
[14] B.Goebel, L.L.Wang, T.Tschudi (Inst. of Appl. Phys., Tech. Hochschule Darmstadt, Germany): Multilayer technoloy for diffractive optical elements. Appl. Opt. (USA), vol.35, no.22, p.4490-3 (1 Aug. 1996).
[15] J.Vydra, H.Beisinghoff, T.Tschudi (Inst. für Angewandte Phys., Tech. Hochschule Darmstadt, Germany), M.Eich: Photodecay mechanisms in side chain nonlinear optical polymethacrylates. Appl. Phys. Lett.(USA), vol.69, no.8, p.1035-7 (19 Aug. 1996).
[16] A.Schosser B.Knodler T.Tschudi (Tech. Hochschule Darmstadt Germany), W.F.X.Frank, A.Stelmaszyk, D.Muschert, D.Ruck, S.Brunner, F.Pozzi, S.Morasca, C.de Bernardi: Optical components in polymers. Proc. SPIE - Int. Soc.Opt.Eng. (USA), vol.2540, p.110-17 (1995). (Current Developments in Optical Design and Engineering V, San Diego, CA, USA, 12-13 July 1995).

## Patentansprüche

1. Stereo-Hologramm-Display zur räumlichen Darstellung eines Gegenstandes bestehend aus
einer einer Linsenrasterscheibe (1) mit senkrecht angeordneten Zylinderlinsen; einem in Blickrichtung dahinter angeordneten Mikrodisplay (4) mit darauf angeordneten Pixeln, wobei auf dem Mikrodisplay nur binär codierte Pixel von wenigen µm² Größe angeordnet sind, wobei die binären Pixel von einem Computer ansichtengerecht ermittelt sind und wobei binär bedeuten kann: transparent oder absorbierend, transparent oder streuend, hell oder dunkel, horizontal oder vertikal polarisierend;
aus einer zwischen Linsenrasterscheibe (1) und Mikrodisplay (4) angeordneten Helligkeitsmaske (3) mit waagrecht angeordneten Streifen unterschiedlicher Lichtdurchlaßkoeffizienten zur Helligkeitscodierung der Pixel; und
aus einer zwischen Linsenrasterscheibe (1) und Mikrodisplay (4) angeordneten Farbmaske (2) mit waagrecht angeordneten Streifen unterschiedlicher Farbe zur Farbcodierung der Pixel.

2. Stereo-Hologramm-Display nach Anspruch 1, **dadurch gekennzeichnet, daß** hinter jedem waagerechten Farbstreifen der Farbmaske (2) ein Helligkeitscodierstreifen (vgl. Fig. 4 b) angeordnet ist, der selbst in waagerechte Teilstreifen unterteilt ist mit unterschiedlichen Lichtdurchlaßkoeffizienten (vorzugsweise Zweierpotenzen für die Amplitude z.B. 1, 1/2, 1/4, 1/8, 1/16,... ), und daß die binären, schwarzen oder weißen Mikrofelder (10) auf dem Mikrodisplay (4) jeweils innerhalb eines solchen schmalen Helligkeits-Teilstreifens liegen, wobei die innerhalb eines Farbstreifens übereinander liegenden Mikrofelder so an- oder abgeschaltet sind, daß die durchgelassene Lichtamplitude über einen Farbstreifen in der Summe der gewünschten Helligkeitsstufe entspricht.

3. Stereo-Hologramm-Display nach Anspruch 1 oder 2, **dadurch gekennzeichnet, daß** die Helligkeits-Teilstreifen innerhalb eines Farbstreifens vorteilhafterweise so plaziert sind, daß die helleren lichtdurchlässigeren Teilstreifen mehr in der Mitte der Farbstreifen zu liegen kommen, während die dunkleren zu den Farbübergängen hin verschoben sind.

4. Stereo-Hologramm-Display nach Anspruch 1, 2 oder 3 mit einem LC-Streudisplay als binärem Mikrodisplay (4), **dadurch gekennzeichnet, daß** bei einer schrägen Bestrahlung von hinten oben oder unten mit weißem Licht die durchgehenden Strahlen an eingebetteten waagerechten Minispiegelstreifen (9) reflektiert oder absorbiert werden.

5. Stereo-Hologramm-Display nach Anspruch 4, **dadurch gekennzeichnet, daß** das binäre Mikro-Streudisplay abgenommen werden kann und durch ein Fotodisplay, bestehend aus einem binär beschriebenen Film (7) und einer Beleuchtungsfläche (8), ersetzt werden kann, auf das die binären Stereo-Hologramme vorher aufgebracht wurden.

6. Stereo-Hologramm-Display nach vorgenannten Ansprüchen, **dadurch gekennzeichnet, daß** es anstelle der rückwärtigen Beleuchtung eine diffuse Bestrahlung von vorn aufweist und hinter dem Streudisplay (4) eine absorbierende Fläche angeordnet ist, bzw. im Falle eines binär beschriebenen Filmes (7) - eine weiße dispers reflektierende Schicht vorhanden ist.

## Claims

1. Stereo hologram display for the three-dimensional representation of an object, comprising
a lenticular screen plate (1) with cylindrical lenses arranged vertically;
a microdisplay (4) arranged behind same in the line of sight and having pixels disposed thereon, wherein only binary coded pixels of a few mm² in size are arranged on the microdisplay, wherein the binary pixels are provided by a computer doing justice to all views and wherein binary can mean: transparent or absorbent, transparent or scattering, bright or dark, polarising vertically or horizontally;
a brightness mask (3), arranged between the lenticular screen plate (1) and the microdisplay (4) and having strips with differing light transmission coefficients arranged horizontally for the brightness coding of the pixels; and
a colour mask (2), arranged between the lenticular screen plate (1) and the microdisplay (4) and having strips of differing colour arranged horizontally for the colour coding of the pixels.

2. Stereo hologram display according to claim 1, **characterised in that** behind each horizontal colour strip of the colour mask (2) there is arranged a brightness coding strip (cf. Fig. 4b) which is itself subdivided into horizontal partial strips with differing light transmission coefficients (preferably to the power of two for the amplitude e.g. 1, 1/2, 1/4, 1/8, 1/6, ...), and **in that** the binary, black or white microfields (10) on the microdisplay (4) in each case lie within such a narrow brightness partial strip, the microfields lying the one above the other within a colour strip being so switched on or off that the light amplitude transmitted via a colour strip corresponds in total to the desired degree of brightness.

3. Stereo hologram display according to claim 1 or 2, **characterised in that** the brightness partial strips are advantageously so placed within a colour strip that the brighter, more translucent partial strips come to lie more in the centre of the colour strips, whilst the darker ones are displaced towards the colour transition regions.

4. Stereo hologram display according to claim 1, 2 or 3 having an LC scatter screen as the binary microdisplay (4), **characterised in that** in the case of angled irradiation with white light from behind at the top or bottom, the rays passing through are reflected on embedded horizontal mini-mirror strips (9) or absorbed.

5. Stereo hologram display according to claim 4, **characterised in that** the binary micro scatter screen can be removed and replaced by a photodisplay comprising a film (7) inscribed in binary and an illuminating surface (8), to which the binary stereo holograms have been applied in advance.

6. Stereo hologram display according to the above-mentioned claims, **characterised in that**, instead of back illumination, it has diffuse irradiation from the front, and behind the scatter screen (4) is arranged an absorbent surface, or respectively, in the case of a film (7) inscribed in binary, a white layer reflecting in a dispersed manner is present.

## Revendications

1. Afficheur à hologrammes stéréographiques destiné à la représentation dans l'espace d'un objet, formé par un écran gaufré (1) avec des lentilles cylindriques disposées verticalement ; par un micro-afficheur (4) disposé en aval de celui-ci par référence au sens du regard, sur lequel sont disposés des pixels, le micro-afficheur ne comportant que des pixels à codage binaire avec une surface de quelques µm², sachant que les pixels binaires sont définis par un ordinateur de manière à pouvoir être projetés et binaire peut signifier : transparent ou absorbant, transparent ou diffus, clair ou foncé, à polarisation horizontale ou verticale ; par un masque de luminosité (3) disposé entre l'écran gaufré (1) et le micro-afficheur (4) et comportant des bandes disposées horizontalement et présentant différents coefficients de transparence pour le codage de la luminosité des pixels ; et par un masque de couleurs (2) disposé entre l'écran gaufré (1) et le micro-afficheur (4) et comportant des bandes disposées horizontalement et présentant différentes couleurs pour le codage couleur des pixels.

2. Afficheur à hologrammes stéréographiques selon la revendication 1, **caractérisé en ce que** derrière chaque bande de couleur horizontale du masque de couleurs (2) est disposée une bande de codage de la luminosité (cf. figure 4b), qui est elle-même subdivisée en bandes partielles horizontales avec différents coefficients de transparence (de préférence, de puissance deux pour les amplitudes, telles que 1, 1/2, 1/4, 1/8, 1/16, ...), et **en ce que** les microchamps (10) binaires, noirs ou blancs sur le micro-afficheur (4) sont situés chacun dans une telle étroite bande partielle de luminosité, les microchamps superposés à l'intérieur d'une bande de couleur sont activés et inactivés de telle sorte que l'amplitude de la lumière passant à travers une bande de couleur est égale à la somme des échelons de brillance souhaités.

3. Afficheur à hologrammes stéréographiques selon la revendication 1 ou 2, **caractérisé en ce que** les bandes partielles de luminosité sont placées avantageusement à l'intérieur d'une bande de couleur, de telle sorte que les bandes partielles plus claires plus transparentes sont situées davantage vers le milieu de la bande de couleur, alors que les bandes partielles plus foncées sont décalées vers les zones de transition des couleurs.

4. Afficheur à hologrammes stéréographiques selon la revendication 1, 2 ou 3, dans lequel le micro-afficheur (4) binaire est un afficheur LC à écran diffusant,
**caractérisé en ce que**, en présence d'un rayonnement oblique de lumière blanche émis à l'arrière, d'en haut ou d'en bas, les rayons traversant sont réfléchis ou absorbés sur des mini-bandes de réflexion (9) horizontales insérées.

5. Afficheur à hologrammes stéréographiques selon la revendication 4, **caractérisé en ce que** le micro-afficheur à écran diffusant binaire peut être retiré et peut être remplacé par un photo-afficheur, formé par un film (7) à inscriptions binaires et une surface d'éclairage (8), sur laquelle les hologrammes stéréographiques binaires ont été appliqués antérieurement.

6. Afficheur à hologrammes stéréographiques selon les revendications précédentes, **caractérisé en ce qu'**il est possible de remplacer l'éclairage arrière par un rayonnement diffus émis par l'avant et de disposer une surface absorbante en aval de l'afficheur à écran diffusant (4) ou - en présence d'un film (7) à inscriptions binaires - de prévoir une couche blanche réfléchissante de manière diffuse.
